**Europäisches Patentamt**

**European Patent Office**

**Office européen des brevets**

(11) Numéro de publication : **0 021 509**
**B1**

(12) **FASCICULE DE BREVET EUROPÉEN**

(45) Date de publication du fascicule du brevet :
**18.01.84**

(51) Int. Cl.³ : **H 04 Q   3/00, H 04 M   19/00**

(21) Numéro de dépôt : **80200548.8**

(22) Date de dépôt : **13.06.80**

(54) **Joncteur d'abonné électronique.**

(30) Priorité : **25.06.79 FR 7916261**

(43) Date de publication de la demande :
**07.01.81 Bulletin 81/01**

(45) Mention de la délivrance du brevet :
**18.01.84 Bulletin 84/03**

(84) Etats contractants désignés :
**BE CH DE FR GB LI SE**

(56) Documents cités :
**DE-A- 2 649 351**
**FR-A- 2 145 074**
**GB-A- 1 527 293**
**GB-A- 2 001 508**
**GB-A- 2 007 463**

(73) Titulaire : **TELECOMMUNICATIONS RADIOELECTRI-
QUES ET TELEPHONIQUES T.R.T.
88, rue Brillat Savarin
F-75013 Paris (FR)**

(72) Inventeur : **Ferrieu, Gilbert Marie Marcel
SOCIETE CIVILE S.P.I.D 209 rue de l'Université
F-75007 Paris (FR)**

(74) Mandataire : **Tissot, Jean et al
Société Civile S.P.I.D. 209, rue de l'Université
F-75007 Paris (FR)**

EP 0 021 509 B1

# 0 021 509

## Joncteur d'abonné électronique

L'invention concerne un joncteur d'abonné comportant un amplificateur de puissance symétrique muni de deux bornes d'alimentation à relier aux deux bornes d'une source continue d'alimentation, et de deux bornes de sortie à relier aux deux extrémités de la ligne d'abonné, ce joncteur étant muni en outre de moyens pour former un courant de somme pondérée des courants entrant dans la ligne d'abonné et sortant de la ligne d'abonné, de moyens de déphasage et d'aiguillage pour former deux tensions en phase et en opposition de phase avec la tension aux bornes d'une impédance de charge traversée par ledit courant de somme pondérée et pour appliquer ces deux tensions par ledit contreréactive sur les deux bornes d'entrée de l'amplificateur.

Un joncteur d'abonné de ce genre a été décrit dans la demande de brevet français publiée n° 2 430 153 déposée par la demanderesse le 26 juin 1978 et dans le certificat d'addition publié n° 2 437 757 déposé le 28 septembre 1978. Cette demande de brevet et ce certificat d'addition concernent respectivement des joncteurs d'abonné pour le couplage en quatre fils et en deux fils de la ligne d'abonné avec un central téléphonique.

On sait qu'un joncteur d'abonné est un dispositif destiné à raccorder chaque ligne d'abonné à un central téléphonique et devant remplir à cet effet un certain nombre de fonctions, parmi lesquelles l'alimentation de la ligne d'abonné en courant continu dans un sens ou dans l'autre, la transmission des signaux de conversation entre la ligne d'abonné et le central téléphonique et enfin la transmission des signaux de taxation vers l'abonné. Ces fonctions doivent être remplies en tenant compte d'un certain nombre de contraintes : le courant continu dans la ligne d'abonné peut varier dans un large domaine, selon la longueur de la ligne ; la résistance du joncteur pour le courant continu (résistance de pont d'alimentation) doit avoir une valeur minimale (par exemple 300 $\Omega$) et être symétrique vis-à-vis des deux bornes de la source continue d'alimentation ; l'impédance du joncteur pour les courants de conversation doit avoir une valeur spécifiée (par exemple 600 $\Omega$) et avoir une parfaite symétrie par rapport à la masse.

Dans le joncteur d'abonné du type envisagé dans le préambule, les caractéristiques de symétrie de la résistance du pont d'alimentation et de l'impédance du joncteur pour les courants de conversation sont tributaires de la précision avec laquelle, pour former le courant de somme pondérée, on peut réaliser l'égalité des coefficients de pondération du courant entrant dans la ligne d'abonné et du courant sortant de la ligne d'abonné. D'autre part dans ce joncteur les valeurs de résistance de pont d'alimentation et d'impédance pour les courants de conversation dépendent de la valeur commune des deux coefficients de pondération précités et il est très utile, pour amener cette résistance et cette impédance à des valeurs désirées, d'avoir un moyen de réglage de cette valeur commune, n'influençant pas l'égalité résultant du premier réglage.

Dans les joncteurs d'abonnés décrits dans la demande de brevet et dans le certificat d'addition précités, on utilise pour pondérer le courant entrant dans la ligne d'abonné et le courant sortant de la ligne d'abonné, des miroirs de courant classiques procurant des coefficients de pondération non réglables, qui sont déterminés par des caractéristiques de semi-conducteurs et dont il est difficile d'obtenir l'égalité avec la précision requise.

Un but de la présente invention est donc de fournir, pour un joncteur du type envisagé dans le préambule, les moyens de former le courant de somme pondérée avec un réglage permettant de réaliser avec précision l'égalité des coefficients de pondération, de façon largement indépendante de caractéristique de semi-conducteurs et avec un autre réglage n'influençant pas le premier réglage et permettant de régler la valeur commune des coefficients de pondération.

Conformément à l'invention, ce but est atteint dans un joncteur d'abonné du type décrit dans le préambule et comportant, pour former le courant de somme pondérée, d'une part un miroir de courant dont la borne somme et la borne d'entrée sont reliées respectivement à une borne de la source continue d'alimentation et à la borne d'alimentation correspondante de l'amplificateur de puissance symétrique, et d'autre part un circuit de pondération et de sommation de deux courants d'entrée comprenant un circuit diviseur de tension dont une extrémité est connectée à la borne de sortie du miroir de courant, dont l'autre extrémité est connectée à l'autre borne de la source continue d'alimentation et dont enfin la borne intermédiaire est connectée à l'autre borne d'alimentation dudit amplificateur, le rapport de tension du circuit diviseur de tension étant ajusté pour être substantiellement égal au rapport de courant du miroir de courant, la tension aux extrémités du circuit diviseur de tension étant appliquée à un circuit suiveur de tension qui est muni d'une résistance de réglage et qui est réglé pour fournir ledit courant de somme pondérée avec l'amplitude désirée.

Avec un joncteur d'abonné ainsi conçu, les caractéristiques sont obtenues par réglage de résistances et sont largement indépendantes des caractéristiques des semi-conducteurs.

Il est particulièrement avantageux d'utiliser comme miroir de courant ayant en fait la fonction de pondération d'un courant d'entrée et comme circuit de pondération et de sommation de deux courants d'entrée, le même type de circuit qui est décrit et revendiqué dans la demande de brevet divisionnaire n° 81 200 130.3 (EP 0 029 823). Ce type de circuit permet d'obtenir à la fois un miroir de courant réglable par résistances et un circuit de pondération et de sommation de deux courants d'entrée avec les réglages par résistances requis, avec des qualités particulières de linéarité dans un large domaine de courants d'entrée.

Pour faciliter l'obtention de valeurs spécifiées de résistance de pont d'alimentation et d'impédance du joncteur, il est avantageux que la résistance de réglage du circuit suiveur de tension servant à régler l'amplitude du courant de somme pondérée, soit divisée en deux résistances dont l'une est découplée par un condensateur dont la valeur d'impédance est très faible pour les courants de conversation, la valeur de résistance du pont d'alimentation du joncteur étant réglée au moyen de la résistance découplée sans modifier l'impédance du joncteur pour les courants de conversation.

Avec une résistance de réglage du circuit suiveur de tension formée comme on vient de l'indiquer, de deux résistances dont l'une est découplée par un condensateur, il devient très simple de réaliser, dans certaines circonstances, différents modes d'alimentation en courant continu de la ligne d'abonné.

Ainsi, il est avantageux que, lorsque le central a détecté un faux appel de la part de l'abonné, la valeur de ladite résistance découplée par un condensateur soit réduite automatiquement pour réduire le courant continu dans la ligne d'abonné.

Par ailleurs, pour utiliser le joncteur sur des lignes d'abonné très courtes, il est avantageux que, pour limiter le courant continu fourni par le joncteur à cette ligne, on utilise un circuit à seuil qui reçoit à son entrée une fraction au moins de la tension aux bornes de ladite résistance découplée par un condensateur et qui fournit en cas de dépassement de seuil, un courant qui est ajouté audit courant de somme pondérée.

L'invention fournit également un moyen simple d'alimenter la ligne d'abonné par les trains d'oscillations du signal de taxation (à fréquence 12 kHz par exemple), en évitant toute émission d'un signal correspondant en direction du central.

A cet effet, le joncteur comporte un circuit séparateur qui transmet la tension aux bornes de ladite impédance de charge vers l'entrée desdits moyens de déphasage et d'aiguillage, des moyens pour moduler la tension appliquée à cette entrée, pendant la durée des trains d'oscillations du signal de taxation, par un signal ayant la fréquence desdites oscillations, enfin des moyens de filtrage pour supprimer pratiquement toute composante à cette fréquence dans le courant de somme pondérée.

Lesdits moyens de filtrage sont avantageusement constitués par un simple circuit résonnant série accordé sur la fréquence des oscillations du signal de taxation et connecté entre les deux bornes d'alimentation de l'amplificateur de puissance symétrique.

La description suivante en regard des dessins annexés, le tout donné à titre d'exemple, fera bien comprendre comment l'invention peut être réalisée.

La figure 1   représente le joncteur conforme à l'invention, muni du dispositif de formation du courant de somme pondérée.

La figure 2   représente un mode de réalisation du circuit suiveur de tension servant à régler l'amplitude du courant de somme pondérée et permettant une réduction du courant dans la ligne d'abonné en cas de faux appel et une limitation de ce courant en cas de ligne courte.

La figure 3   représente le joncteur conforme à l'invention, muni de moyens pour engendrer sur la ligne d'abonné le signal de taxation.

La figure 4   montre la caractéristique idéale tension-courant de dipôles qu'il est avantageux de disposer en série sur les bornes d'alimentation de l'amplificateur de puissance symétrique.

La figure 5   est le schéma d'un mode de réalisation de ces dipôles.

Sur la figure 6,   les schémas 6a et 6b représentent deux structures équivalentes du joncteur de l'invention, déduites par dualité.

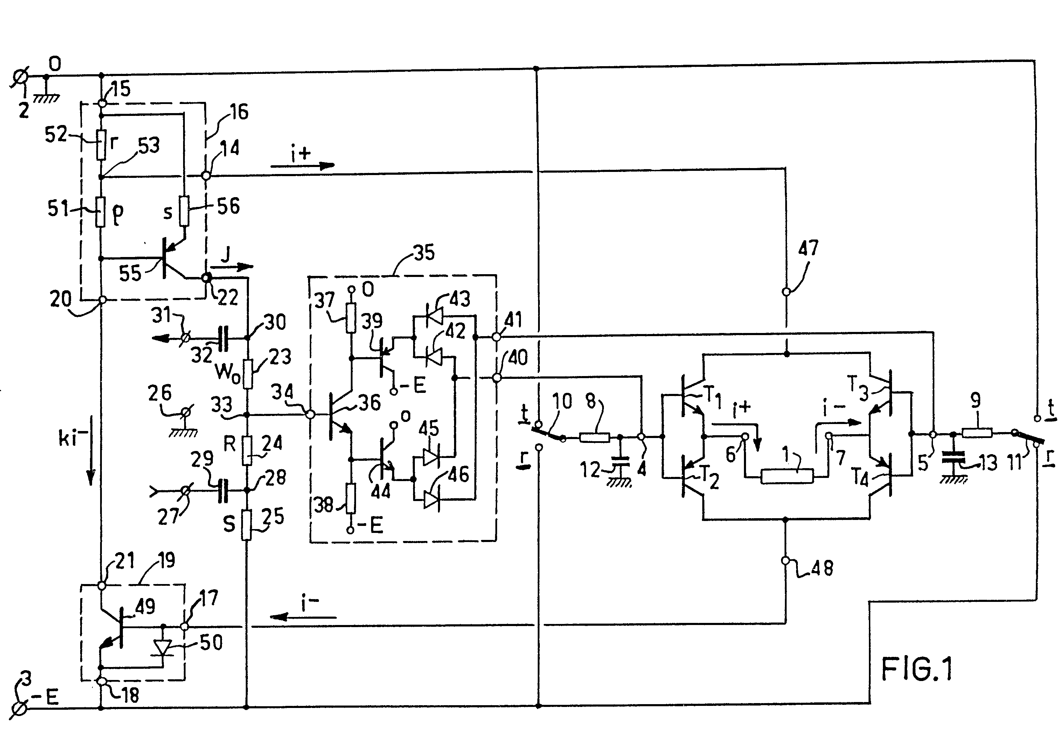

Le schéma du joncteur de l'invention est représenté à la figure 1. Une fonction de ce joncteur est d'assurer l'alimentation en courant continu de la ligne d'abonné 1, à partir d'une source d'alimentation continue dont la borne positive 2 est au potentiel zéro de la masse et dont la borne négative 3 est au potentiel $-E$ ($-48$ V) par exemple).

Ce joncteur comporte un amplificateur de puissance symétrique formé par deux paires de transistors complémentaires $(T_1, T_2)$ et $(T_3, T_4)$. Chacun de ces transistors peut être un transistor composite connu sous le nom de montage de Darlington.

Les collecteurs des transistors npn $T_1$ et $T_3$ sont interconnectés et reliés à une borne d'alimentation 47 de l'amplificateur et les collecteurs des transistors pnp $T_2$ et $T_4$ sont interconnectés et reliés à l'autre borne d'alimentation 48 de l'amplificateur.

Les bases des transistors de chaque paire $(T_1, T_2)$ et $(T_3, T_4)$ sont interconnectées et reliées respectivement aux bornes d'entrée 4 et 5 de l'amplificateur. Ces bornes d'entrée 4 et 5 sont reliées aux bornes d'alimentation 2 et 3 à travers les résistances 8 et 9 et les circuits commutateurs 10 et 11 établis sur des positions inverses t et r. En outre les deux bornes d'entrée 4 et 5 sont reliées à la masse par l'intermédiaire des condensateurs 12 et 13.

Les émetteurs des transistors $(T_1, T_2)$ et $(T_3, T_4)$ sont également interconnectés et reliés respectivement aux bornes de sortie 6 et 7 de l'amplificateur symétrique. Ces bornes de sortie 6 et 7 sont connectées aux deux extrémités de la ligne d'abonné 1.

La borne d'alimentation 47 de l'amplificateur symétrique est reliée à la borne positive 2 de la source d'alimentation, par l'intermédiaire des bornes 14 et 15 d'un circuit 16 que l'on décrira par la suite. L'autre borne d'alimentation 48 de l'amplificateur est reliée à la borne négative 3 de la source d'alimentation par l'intermédiaire des bornes 17 et 18 d'un circuit 19 que l'on décrira par la suite. Les circuits 16 et 19 sont reliés par leurs bornes respectives 20 et 21 et coopèrent comme on l'expliquera par la suite pour former un mode de réalisation conforme à l'invention du dispositif qui engendre le courant de somme pondérée du courant entrant dans la ligne d'abonné 1 et du courant sortant de cette ligne d'abonné.

On envisage sur le schéma de la figure 1 un couplage en quatre fils avec le central et ce couplage peut être avantageusement réalisé, comme on l'expliquera par la suite, en appliquant le courant de somme pondérée J qui apparaît sur la borne 22 du circuit 16, à un montage de trois résistances en série 23, 24, 25, relié à la borne d'alimentation 3. L'accès quatre fils du joncteur avec le central est formé de la façon suivante. Le point d'interconnexion 28 des résistances 24 et 25 est relié à la borne 27 à travers le condensateur de liaison 29, les signaux en provenance du central étant appliqués entre la borne d'entrée 27 du joncteur et la borne 26 reliée à la masse. D'autre part, l'extrémité 30 de la résistance 23 est reliée à la borne 31 à travers le condensateur de liaison 32, les signaux à trasmettre au central étant disponibles entre la borne de sortie 31 du joncteur et la borne 26 reliée à la masse. Les condensateurs de liaison 29 et 32 ont une impédance très faible pour les signaux de conversation transmis.

Par ailleurs, le point d'interconnexion 33 des résistances 23 et 24 est relié à l'entrée 34 d'un circuit de déphasage et d'aiguillage 35. Ce circuit 35 comporte un transistor npn 36 dont la base est reliée à l'entrée 34 et dont le collecteur et l'émetteur sont reliés à une extrémité des résistances de même valeur 37 et 38 dont l'autre extrémité est au potentiel 0 et $- E$, des bornes d'alimentation 2 et 3. Le collecteur du transistor 36 est relié à la base du transistor pnp 39 dont le collecteur est porté au potentiel d'alimentation $- E$ et dont l'émetteur est relié aux bornes de sortie 40 et 41 du circuit 35 à travers les diodes 42 et 43 montées dans le même sens que la diode émetteur-base dudit transistor 39. L'émetteur du transistor 36 est relié à la base du transistor npn 44 dont le collecteur est porté au potentiel 0 et dont l'émetteur est relié aux bornes 40 et 41 à travers les diodes 45 et 46 montées dans le même sens que la diode base-émetteur dudit transistor 44. Les bornes de sortie 40 et 41 du circuit 35 sont connectées respectivement aux bornes d'entrée 4 et 5 de l'amplificateur de puissance symétrique.

En l'absence de ce circuit 35, c'est-à-dire en supposant par exemple coupées les liaisons entre les bornes 40, 4 et 41, 5, les tensions appliquées sur les bornes d'entrée 4 et 5 de l'amplificateur symétrique sont respectivement 0 et $- E$ lorsque les circuits commutateurs 10 et 11 sont établis en permanence dans la position indiquée sur la figure. Les transistors $T_1$ et $T_4$ sont alors passants et les transistors $T_2$ et $T_3$ sont bloqués. En négligeant les chutes de tension dans les diodes émetteur-base des transitors $T_1$ et $T_4$, ces tensions 0 et $- E$ se retrouvent sur les bornes de sortie 6 et 7 de l'amplificateur symétrique de sorte que la ligne d'abonné 1 est alimentée par une tension d'amplitude E, y faisant circuler le courant continu dans le sens de la borne 6 à la borne 7.

On va maintenant expliquer la fonction du circuit de déphasage et d'aiguillage 35 que l'on suppose maintenant connecté. On appelle u la tension aux bornes des deux résistances en série 24 et 25, cette tension u résultant de la circulation du courant de somme pondérée J et résultant aussi de l'application sur la borne 27 des signaux de conversation provenant du central. La tension (par rapport à la masse) appliquée à l'entrée 34 du circuit 35 est donc $- E + u$. Sur l'émetteur du transistor 36 apparaît la tension $- E + u$ et sur son collecteur apparaît la tension $- u$. A travers la diode base-émetteur du transistor 39, la diode 42 et la borne 40, cette tension $- u$ est transmise sur la borne d'entrée 4 de l'amplificateur symétrique et à travers la diode base-émetteur du transistor 44, la diode 46 et la borne 41, la tension $- E + u$ est transmise sur la borne d'entrée 5 de l'amplificateur symétrique. Ainsi, aux tensions 0 et $- E$ qui apparaissaient sur les deux bornes d'entrée 4 et 5 de l'amplificateur symétrique, on a ajouté grâce au circuit 35, deux tensions de contreréaction $- u$ et $+ u$. Via les diodes base-émetteur des transistors $T_1$ et $T_4$, les tensions $- u$ et $- E + u$ apparaissant sur les bornes d'entrée 4 et 5, sont transmises respectivement sur les bornes de sortie 6 et 7 de l'amplificateur symétrique. La ligne d'abonné est maintenant alimentée par une tension d'amplitude $E - 2u$, faisant circuler le courant continu dans le sens de la borne 6 à la borne 7.

Si les circuits commutateurs 10 et 11 sont établis dans la position inverse de celle indiquée sur la figure, les tensions sur les bornes d'entrée 4 et 5 de l'amplificateur symétrique sont respectivement $- E$ et 0 en l'absence du circuit 35 et le courant continu dans la ligne d'abonné circule dans le sens de la borne 7 à la borne 6. Avec le circuit 35, il est aisé de voir que l'on applique sur les deux bornes d'entrée 4 et 5 de l'amplificateur symétrique les deux tensions de contreréaction $+ u$ et $- u$ et que la ligne d'abonné est alimentée par une tension d'amplitude $E - 2u$, faisant circuler le courant continu dans le sens de la borne 7 à la borne 6.

On va maintenant décrire le fonctionnement du joncteur, d'abord en ce qui concerne l'alimentation en courant continu de la ligne d'abonné. On ne considère pour cela que les composantes continues des courants et tensions. Pour respecter les spécifications, le joncteur doit se comporter dans les conditions normales comme un pont d'alimentation ayant une résistance Ro, également répartie sur les deux bornes de la source d'alimentation.

Puisque le joncteur permet d'appliquer sur la ligne d'abonné la tension d'amplitude $E - 2u$, il se comporte comme un pont d'alimentation de résistance totale $Ro = 2u/i$, i étant le courant de boucle, de nature transversale, fourni par le joncteur à la ligne d'abonné. Cette résistance de pont d'alimentation se répartit en deux valeurs égales $Ro/2 = u/i$ sur les deux bornes de la source d'alimentation.

En appelant respectivement R et S les valeurs des résistances 24 et 25 traversées par le courant de somme pondérée J, on a :

$$u = (R + S) J$$

et donc : (1)

$$Ro = \frac{2(R + S) J}{i}$$

En appelant $i^+$ le courant entrant dans la ligne d'abonné (par la borne 6 dans le cas de la figure) et $i^-$ le courant sortant de la ligne d'abonné (par la borne 7), le courant J résultant de la somme pondérée des courants $i^+$ et $i^-$ avec les coefficients de pondération respectifs $\lambda^+$ et $\lambda^-$, s'écrit :

$$J = \lambda^+ i^+ + \lambda^- i^-$$

Si les deux coefficients de pondération $\lambda^+$ et $\lambda^-$ ont la même valeur $\lambda/2$ on peut écrire :

$$J = \lambda/2 \, (i^+ + i^-)$$

Il est aisé de se rendre compte qu'un courant de somme pondérée J formé de cette manière ne dépend que du courant transversal i fourni par le joncteur à la ligne d'abonné et est indépendant d'un courant longitudinal $i_e$ qui peut être créé intempestivement dans la ligne d'abonné. En effet les courants $i^+$ et $i^-$ peuvent s'écrire respectivement :

$$\begin{cases} i^+ = i + i_e \\ i^- = i - i_e \end{cases}$$

La somme $i^+ + i^- = 2i$ ne dépend que du courant transversal i et est indépendante du courant longitudinal $i_e$.

Le courant J formé par la somme pondérée des courants $i^+$ et $i^-$ avec le même coefficient de pondération $\lambda/2$, peut donc s'écrire :

$$J = \lambda i$$ (2)

Avec cette valeur de J, la résistance totale Ro du pont d'alimentation auquel est équivalent le joncteur s'écrit d'après la formule (1) ci-dessus :

$$Ro = 2\lambda(R + S)$$ (3)

Cette résistance de pont d'alimentation Ro est répartie en deux valeurs égales $Ro/2 = \lambda(R + S)$ sur les deux bornes de la source d'alimentation. Mais on doit bien noter que ceci n'est vrai que si le courant de somme pondérée J est formé avec le même coefficient de pondération $\lambda/2$ pour les courants $i^+$ et $i^-$. Si cette condition est respectée, la formule (3) montre qu'en agissant sur le coefficient $\lambda$ et/ou les résistances R ou S, on peut régler la résistance de pont d'alimentation Ro du joncteur, en conservant une parfaite répartition de cette résistance.

On va maintenant expliquer comment s'opère la transmission des signaux de conversation entre le central et la ligne d'abonné, l'accès quatre fils avec le central étant constitué par les bornes 26, 27 et 31, l'accès deux fils avec la ligne d'abonné étant constitué par les bornes 6 et 7. Dans cette explication, les diverses grandeurs utilisées (tensions, courants, impédances etc ...) ne se rapportent qu'aux signaux variables de conversation.

On examine d'abord le cas de la transmission des signaux de conversation du central vers la ligne d'abonné et l'on suppose qu'aucune tension variable n'est engendrée par le poste d'abonné. Le courant de somme pondérée J est supposé formé toujours de la même manière, avec le même coefficient de pondération $\lambda/2$ pour les courants entrant dans la ligne d'abonné et sortant de la ligne d'abonné. Ce courant de somme pondérée J a donc toujours la forme $J = \lambda i$ et circule à travers les résistances 23, 24, le condensateur de liaison 29 de forte valeur et le circuit du central à basse impédance (non représenté) qui est branché entre la borne d'entrée 27 du joncteur et la borne de masse 26. $e_c$ étant la tension provenant du central et appliquée entre ces deux dernières bornes, u étant la tension appliquée à l'entrée 34 du déphaseur 35, R étant la valeur de la résistance 24, on peut écrire :

$$u = e_c + \lambda Ri$$

Grâce au circuit de déphasage et d'aiguillage 35, on obtient entre les deux bornes 6 et 7 de la ligne d'abonné la tension $u_s$ telle que :

$$u_s = -2u$$

W étant l'impédance de la ligne d'abonné, on a aussi :

$$u_s = Wi$$

On déduit facilement de ces formules :

$$u_s = -\frac{2W}{W + 2\lambda R}e_c.$$

Cette dernière formule fait apparaître que pour les signaux de conversation le joncteur se comporte comme une impédance Z telle que :

$$Z = 2\lambda R \tag{4}$$

Cette impédance Z est parfaitement équilibrée par rapport à la masse, si le courant de somme pondérée J a bien la forme $J = \lambda i$ et l'on peut régler sa valeur en agissant sur le coefficient $\lambda$ et/ou la résistance R, sans modifier son équilibrage par rapport à la masse.

Si l'on s'arrange en particulier pour réaliser l'adaptation d'impédance entre la ligne et le joncteur, ce qui se traduit par $W = 2\lambda R$, on obtient $u_s = -e_c$. La tension $e_c$ appliquée à l'entrée quatre fils du joncteur se retrouve intégralement aux bornes de la ligne d'abonné.

Par ailleurs, pour ce sens de transmission, on doit vérifier la possibilité de réalisation de l'effet différentiel, c'est-à-dire qu'aucune tension ne doit apparaître à la sortie quatre fils du joncteur (entre les bornes 31 et 26) sous l'effet de la tension $e_c$.

En appelant Wo la valeur de la résistance 23, la tension $v_s$ à la sortie quatre fils du joncteur peut s'écrire :

$$v_s = u + \lambda Woi$$

Pour le sens de transmission envisagé, on a d'après les formules déjà données :

$$u = -\frac{Wi}{2}$$

$$i = -\frac{2\,e_c}{W + 2\lambda R}$$

On en déduit que la tension $v_s$ peut s'écrire pour ce sens de transmission :

$$v_s = \frac{2\,e_c}{W + 2\lambda R}\left(\frac{W}{2} - \lambda Wo\right)$$

Cette tension s'annule quelle que soit la tension $e_c$ et l'effet différentiel est parfaitement réalisé si la résistance Wo que l'on peut appeler impédance d'équilibrage est telle que :

$$Wo = \frac{W}{2\lambda}.$$

On examine maintenant le fonctionnement du joncteur pour l'autre sens de transmission, de la ligne d'abonné vers le central. On suppose qu'aucune tension provenant du central n'est appliquée à l'entrée quatre fils du joncteur ($e_c = 0$) et qu'une tension $v_a$ est engendrée dans le poste d'abonné. On peut alors écrire avec les notations déjà données :

$$u = \lambda Ri$$

$$-u = Wi + v_a$$

On en déduit que le courant dans la ligne d'abonné sous l'effet de la tension $v_a$, s'écrit :

$$i = -\frac{v_a}{W + 2\lambda R}.$$

Cette expression montre encore que le joncteur se comporte comme une impédance $Z = 2\lambda R$.

On peut en déduire aisément que pour le sens de transmission envisagé la tension recueillie sur la sortie quatre fils du joncteur s'écrit :

$$v_s = -\frac{\lambda(R + W_0)}{W + 2\lambda R} v_a$$

Si l'impédance d'équilibrage Wo est choisie pour réaliser l'effet différentiel et est donc telle que Wo = W/2λ, on vérifie que $v_s = -v_a/2$. On recueille donc à la sortie de l'accès quatre fils du joncteur, la moitié de la tension $v_s$ engendrée dans le poste d'abonné, ce qui correspond à une transmission sans pertes.

Finalement, entre l'accès deux fils du joncteur relié à la ligne d'abonné et l'accès quatre fils relié au central, on obtient une transmission sans pertes ($u_s = -e_c$, $v_s = -v_a/2$), en même temps qu'un effet différentiel parfait, en choisissant les valeurs de λ et R de façon que :

$$W = 2\lambda R$$

$$Wo = \frac{W}{2\lambda}.$$

Avec un joncteur d'abonné du genre que l'on vient de décrire, on a vu qu'il est important que le courant de somme pondérée J du courant $i^+$ entrant dans la ligne d'abonné et du courant $i^-$ sortant de la ligne d'abonné, soit formé avec des coefficients de pondération $\lambda^+$ et $\lambda^-$ de même valeur λ/2. De cette manière la résistance Ro du pont d'alimentation auquel le joncteur est équivalent prend la forme Ro = 2λ(R + S) et reste également répartie sur les bornes de la source d'alimentation, quelles que soient les valeurs données à λ, R et S, pour obtenir une valeur de Ro déterminée. De cette manière également, l'impédance Z du joncteur pour les signaux de conversation prend la forme Z = 2λR et reste parfaitement équilibrée par rapport à la masse, quelles que soient les valeurs données à λ et R pour obtenir une valeur déterminée de Z. On conçoit par ailleurs qu'il soit très utile dans ce joncteur de pouvoir régler la valeur commune λ/2 des deux coefficients de pondération $\lambda^+$ et $\lambda^-$.

La présente invention fournit un dispositif simple et pratique pour former le courant de somme pondérée J en respectant ces exigences, ce dispositif comportant deux réglages distincts, l'un pour obtenir l'égalité des deux coefficients de pondération, l'autre pour régler leur valeur commune.

Ce dispositif est constitué par les circuits 16 et 19 dont les bornes 14 et 17 sont reliées respectivement aux bornes d'alimentation 47 et 48 de l'amplificateur symétrique. Quel que soit le sens du courant continu dans la ligne d'abonné, il circule dans la liaison 14 à 47 un courant pratiquement égal au courant $i^+$ entrant dans la ligne d'abonné et dans la liaison 17 à 48 un courant pratiquement égal au courant $i^-$ sortant de la ligne d'abonné.

Le circuit 19 est un circuit connu sous le nom de miroir de courant qui comporte une borne d'entrée 17 sur laquelle apparaît le courant $i^-$, une borne somme 18 reliée à la borne d'alimentation négative 3 et une borne de sortie 21. Sous la forme simple représentée, le miroir de courant 19 est constitué par un transistor npn 49 et une diode 50, connectés aux bornes 17, 18 et 21 comme l'indique la figure. On sait qu'un miroir de courant fournit sur sa borne de sortie 21 un courant $ki^-$ proportionnel au courant $i^-$ sur sa borne d'entrée 17, le coefficient k ne dépendant dans l'exemple de réalisation envisagé que des caractéristiques géométriques du transistor 49 et de la diode 50, si ceux-ci sont intégrés sur le même corps semi-conducteur.

Le circuit 16 est un circuit de pondération et de sommation de deux courants d'entrée. Sur une borne d'entrée 20 de ce circuit 16 est appliqué comme courant d'entrée le courant $ki^-$ fourni par le miroir de courant 19 et sur l'autre borne d'entrée du circuit 16 est appliqué comme courant d'entrée le courant $i^+$. Entre la borne d'entrée 20 et la borne d'alimentation 2 est connecté un circuit diviseur de tension formé par les deux résistances en série 51 et 52 ayant les valeurs ρ et r. La borne intermédiaire 53 de ce circuit diviseur de tension est reliée à la borne d'entrée 14. La tension v entre les bornes extrêmes du circuit diviseur de tension peut s'écrire :

$$v = r\,i^+ + (r + \rho)ki^-$$

Si les deux résistances r et ρ du circuit diviseur de tension sont telles que :

$$\frac{r}{r + \rho} = k \qquad (5)$$

la tension v s'écrit :

$$v = r(i^+ + i^-) \qquad (6)$$

En réglant donc l'une des résistances r et ρ de façon à respecter la relation (5), on obtient aux bornes extrêmes du circuit diviseur de tension une tension v proportionnelle à la somme des courants $i^+$ et $i^-$.

Cette tension v est appliquée à l'entrée d'un circuit suiveur de tension qui, sous la forme représentée à la figure 1, est constitué par un transistor pnp 55 monté en émetteur suiveur. Sa base et son émetteur sont reliés aux bornes extrêmes du circuit diviseur de tension, par l'intermédiaire de la résistance 56 de valeur s, en ce qui concerne l'émetteur. En négligeant la chute de tension base-émetteur et le courant de base du transistor 5, son courant de collecteur a pour valeur v/s. Si la relation (5) est respectée, ce courant de collecteur a donc la forme r/s ($i^+ + i^-$), c'est-à-dire qu'il représente le courant de somme pondérée J désiré, avec deux coefficients de pondération égaux r/s.

On peut écrire le courant de somme pondérée J sous la forme indiquée à la formule (2) ci-dessus, faisant apparaître le courant transversal i fourni par le jonction :

$$J = \lambda i \qquad \text{avec} \qquad \lambda = \frac{2r}{s}. \tag{7}$$

Finalement, avec le circuit 16 que l'on vient de décrire, on dispose de deux moyens de réglage indépendants. En réglant la valeur ρ de la résistance 51 du circuit diviseur de tension de façon à satisfaire à la relation (5), on réalise l'égalité entre les coefficients de pondération des courants $i^+$ et $i^-$. En réglant la valeur s de la résistance 56 du circuit suiveur de tension, on règle d'après la formule (7) la valeur du coefficient de proportionnalité $\lambda$, donc l'amplitude du courant de somme pondérée J.

L'homme de l'art comprendra aisément que l'on pourrait aussi bien former le courant de somme pondérée avec un miroir de courant 19 ayant sa borne somme reliée à la borne d'alimentation 2, recevant le courant $i^+$ et fournissant le courant $ki^+$, avec un circuit 16 branché sur la borne d'alimentation 3 et recevant les courants $i^-$ et $ki^+$ ; ces circuits 16 et 19 devraient alors être construits avec des transistors complémentaires de ceux indiqués sur la figure 1.

Il est particulièrement avantageux d'utiliser pour le circuit 16 de pondération et de sommation de deux courants d'entrée et pour le miroir de courant 19, les circuits ayant ces fonctions, qui ont été décrits et revendiqués dans la demande de brevet divisionnaire n° 81 200 130.3. Le circuit de pondération et de sommation de deux courants d'entrée décrit dans la demande de brevet divisionnaire comporte comme le circuit 16 de la figure 1, un circuit diviseur de tension 51, 52 à une extrémité duquel on peut appliquer un courant d'entrée ($Ki^-$ dans le cas de la figure 1 de la présente demande) et à la borne intermédiaire duquel on peut appliquer un autre courant d'entrée ($i^+$ dans le cas de la figure 1). Mais le circuit de la demande divisionnaire diffère de celui de la présente demande par le fait que le circuit suiveur de tension auquel on applique la tension présente entre les extrémités du circuit diviseur de tension est conçu pour avoir une caractéristique particulièrement linéaire. Le circuit de la demande divisionnaire présente enfin les mêmes possibilités de réglage que celles du circuit 16 de la figure 1 et qui sont requises pour le jonction d'abonné de l'invention, à savoir, un réglage du rapport de tension du circuit diviseur de tension 51, 52 et un réglage du courant fourni par le circuit suiveur de tension à l'aide d'une résistance de réglage de ce circuit de tension.

Le circuit de pondération d'un courant d'entrée décrit dans la demande de brevet divisionnaire et que l'on peut utiliser comme miroir de courant, à la place du circuit 19 de la figure 1, est obtenu en fait en n'appliquant qu'un courant d'entrée de la demande de brevet divisionnaire. Il présente donc la même caractéristique avantageuse de linéarité.

De plus ses possibilités de réglage permettent d'avoir dans le jonction d'abonné un circuit miroir de courant 19 à rapport de courant k réglable. Il est évidemment très intéressant d'utiliser dans le jonction d'abonné le même type de circuit, décrit dans la demande de brevet divisionnaire pour réaliser les circuits 16 et 19 de la figure 1.

D'après les formules (3) et (4) ci-dessus, la résistance Ro de pont d'alimentation du jonction et l'impédance Z du jonction pour les courants de conversation peuvent être réglées en agissant sur le coefficient $\lambda$. Or, avec la conception du dispositif formant le courant de somme pondérée $J = \lambda i$, que l'on vient de décrire, on peut obtenir de façon très simple des valeurs de $\lambda$ différentes et réglables séparément pour le courant continu et pour les courants variables de conversation de façon à obtenir des réglages indépendants pour la résistance Ro et pour l'impédance Z.

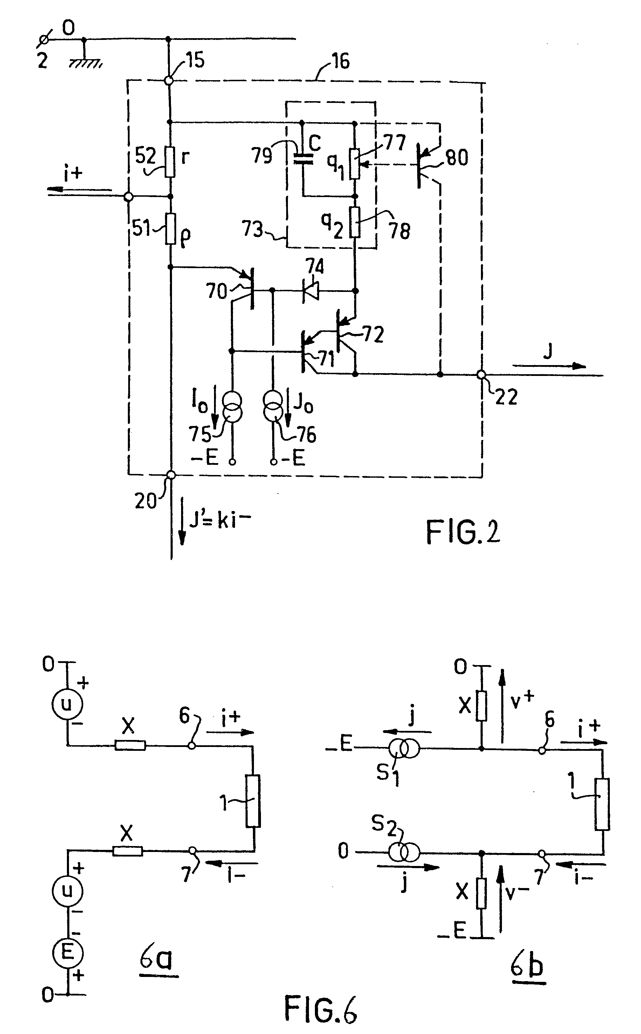

Ce résultat peut être obtenu en effectuant sur le circuit 16 de pondération et de sommation de deux courants d'entrée des modifications portant substantiellement sur la résistance de réglage du circuit suiveur de tension. Ces modifications peuvent s'appliquer à la résistance 56 du circuit 16 de la figure 1 ou à la résistance de réglage du circuit suiveur de tension que comporte également un circuit 16 conforme à celui de la demande de brevet divisionnaire. Ce dernier circuit est représenté à titre d'exemple sur la figure 2, avec les modifications portant sur la résistance de réglage de son circuit suiveur de tension.

Le circuit 16 de la figure 2 comporte, comme celui de la figure 1 un circuit diviseur de tension 51, 52 dont une extrémité reçoit le courant $J' = ki^-$, dont la borne intermédiaire reçoit le courant $i^+$ et dont l'autre extrémité est connectée à la borne 2 de la source d'alimentation. La tension aux extrémités du circuit diviseur de tension est appliquée à un circuit suiveur de tension qui est formé par le transistor 70, le transistor composite 71, 72, la diode 74, les sources de courant 75, 76, le tout étant monté comme l'indique la figure. Le collecteur du transistor composite 71, 72 fournit le courant J de somme pondérée. Entre l'émetteur de ce transistor composite et la borne 2 est connectée une impédance 73 qui est formée par ladite résistance de réglage constituée par deux résistances en série 77 et 78, de valeurs respectives $q_1$ et $q_2$, la résistance 77 étant shuntée par un condensateur 79 de capacité C élevée pour constituer pratiquement un court-circuit pour les courants variables de conversation. Par analogie avec la formule (7), on peut déduire que le coefficient $\lambda$ prend la valeur $2r/(q_1 + q_2)$ pour le courant continu et la valeur $2r/q_2$ pour les courants variables de conversation. Il en résulte que les valeurs de Ro et Z données par les formules (3) et (4) peuvent s'écrire :

$$Ro = \frac{4r}{q_1 + q_2} (R + S) \tag{9}$$

$$Z = \frac{4r}{q_2} R . \tag{10}$$

Il ressort clairement de ces dernières formules que la résistance $q_2$ étant réglée pour obtenir la valeur d'impédance Z désirée pour les courants de conversation, on peut agir sur la résistance $q_1$ pour obtenir n'importe quelle valeur désirée pour la résistance de pont d'alimentation Ro.

Cette possibilité peut être exploitée pour réaliser de façon particulièrement simple une fonction qui est généralement requise dans un joncteur. Cette fonction consiste en une augmentation de la résistance de pont d'alimentation Ro pour diminuer le courant de boucle, lorsque le central a détecté un faux appel provenant par exemple d'un décrochage intempestif et prolongé du combiné de l'abonné. Dans ce cas, sur un ordre provenant du central, la résistance $q_1$ peut être commutée de sa valeur normale à une valeur plus faible correspondant à une valeur plus élevée de Ro.

En adjoignant au circuit 16 représenté sur la figure 2, un transistor 80 représenté en trait pointillé, on peut en outre limiter le courant de boucle à une valeur donnée, en cas de ligne très courte. Ce transistor 80 de type pnp a son émetteur relié à la borne d'alimentation positive 2, son collecteur relié à la borne de sortie 22 du circuit 16 ; par ailleurs on considère maintenant que la résistance 77 est un potentiomètre dont le curseur est relié à la base du transistor 80. Tant que la tension entre la base et l'émetteur du transistor 80 est inférieure à la tension de seuil (de l'ordre de 0,6 V) permettant le déblocage du transistor 80, ce dernier ne conduit pas et le joncteur se comporte comme on l'a expliqué ci-dessus ; notamment le courant de boucle est limité par la résistance de pont d'alimentation Ro du joncteur, donnée par la formule (9). Conformément à ce qui a été déjà expliqué, il revient au même de dire que le courant de boucle i, résulte de l'application à la ligne d'abonné de la tension $E - 2u$, u étant la chute de tension produite par la circulation du courant $J = \lambda i$ à travers les deux résistances en série 24 et 25 de valeurs R et S. Au-delà d'une certaine valeur du courant de boucle i, la circulation du courant $J = \lambda i$ à travers la résistance 77 détermine entre la base et l'émetteur du transistor 80 une tension suffisante pour faire conduire celui-ci. Le courant fourni par le transistor 80 tend à faire augmenter la chute de tension u, à faire diminuer la tension $E - 2u$ appliquée à la ligne d'abonné et donc à faire diminuer le courant de boucle i. Finalement, lorsque la ligne d'abonné devient trop courte, le courant de boucle se stabilise à une valeur $i_0$ que l'on peut régler en agissant sur le curseur du potentiomètre 77. Ce réglage n'agit en aucune manière sur les caractéristiques du joncteur pour les lignes de longueur normale.

Tout ce qu'on vient de décrire et d'expliquer à propos du circuit 16 de la figure 2, s'applique bien entendu au circuit 16 réalisé suivant la figure 1. Il suffit de modifier l'impédance 56 de valeur s, comme on a modifié la résistance 73 de valeur q.

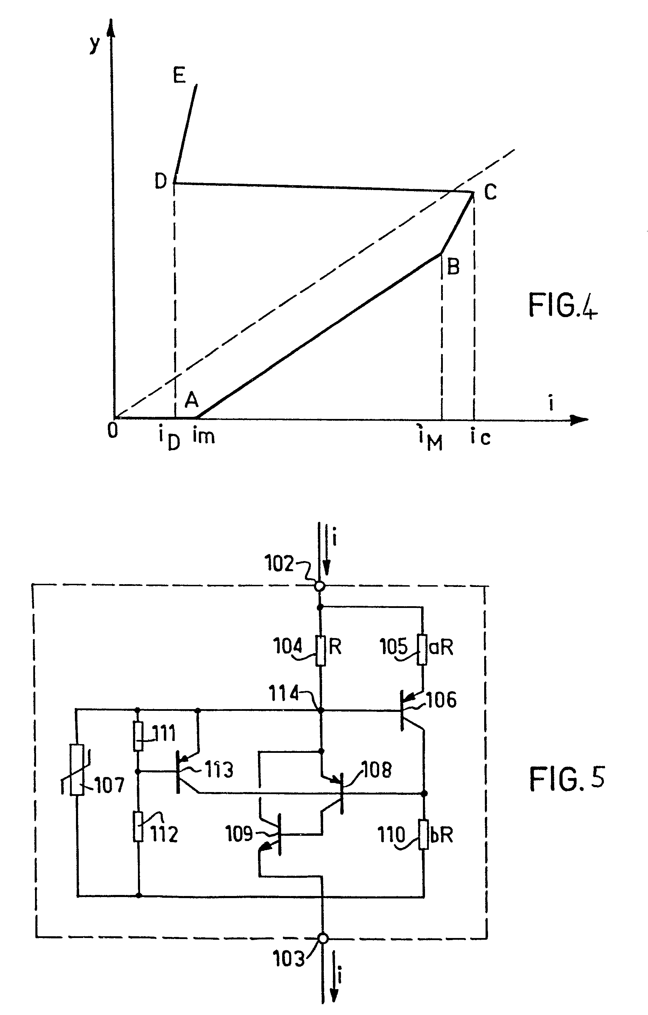

Une autre fonction que doit remplir un joncteur, est d'émettre vers l'abonné un signal de taxation en même temps que les signaux de conversation. On sait que ce signal de taxation est constitué par des trains d'oscillations à une fréquence de par exemple 12 kHz, l'amplitude de ces oscillations étant relativement faible (de l'ordre de 2 Volts), la cadence et la durée des trains étant déterminée par le central. On doit bien entendu veiller à ce que le signal de taxation soit émis seulement en direction de la ligne d'abonné et ne retourne pas vers le central. Le joncteur de la figure 1 se prête bien à la réalisation de cette fonction d'émission du signal de taxation, moyennant l'adjonction de quelques circuits très simples qui sont décrits à la figure 4.

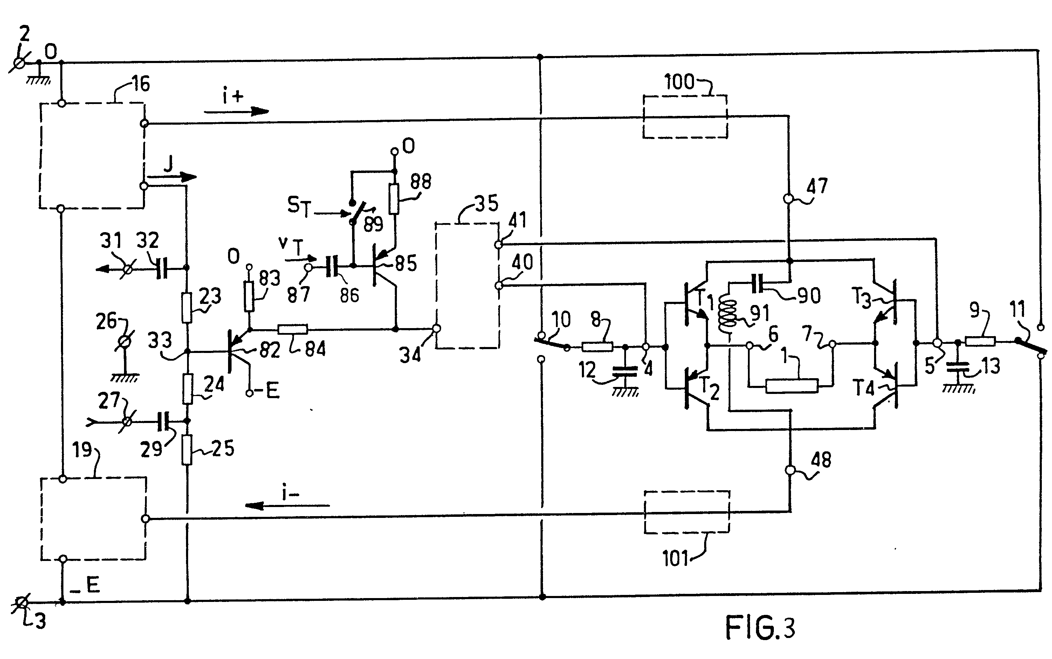

Sur la figure 3, sont représentés les mêmes circuits que sur la figure 1, munis des mêmes références, les circuits 16, 19 et 35 n'ayant toutefois pas été représentés en détail pour simplifier la figure. De plus, le joncteur comporte un transistor pnp 82 dont la base est reliée à la borne 33, dont l'émetteur est relié à une borne de la résistance 83 ayant son autre borne au potentiel zéro et dont le collecteur est au potentiel $- E$. L'émetteur du transistor 82 est relié par l'intermédiaire de la résistance 84 à l'entrée 34 du circuit de déphasage et d'aiguillage 35. Le transistor 82 monté de cette manière fonctionne en émetteur suiveur et transmet à l'entrée 34 du circuit 35 la tension présente sur la borne 33 et appliquée sur sa base.

Toutefois cette tension transmise sur l'entrée 34 est modulée à 12 kHz pendant la durée de chaque train d'oscillations du signal de taxation, à l'aide du transistor pnp 85. Ce dernier a sa base qui est reliée à travers le condensateur de liaison 86, à la borne 87 sur laquelle apparaît un signal sinusoïdal permanent $v_T$ ayant la fréquence de 12 kHz. L'émetteur du transistor 85 est relié à une résistance 88 dont l'autre borne est au potentiel zéro. Le collecteur du transistor 85 est relié à la borne d'entrée 34 du circuit 35. Enfin, la base du transistor 85 est reliée au potentiel zéro à travers le circuit interrupteur 89 commandé par le signal $S_T$ issu du central. Ce signal $S_T$ est tel que l'interrupteur 89 est ouvert pendant la durée prévue de chaque train d'oscillations à 12 kHz et pendant cette durée, on voit que la tension transmise à l'entrée 34 du circuit 35 est modulée à 12 kHz, avec une amplitude que l'on peut ajuster aisément.

En réponse à la composante variable u de la tension appliquée à son entrée 34, le circuit 35 fournit

9

sur ses deux bornes de sortie 40 et 41 les deux tensions en opposition de phase − u et + u, d'où il résulte entre les bornes 6 et 7 de la ligne d'abonné la tension variable 2u résultant des signaux de conversation et de la modulation à 12 kHz obtenue à l'aide du transistor 85. On peut obtenir aisément l'amplitude désirée pour les oscillations du signal de taxation à 12 kHz sur la ligne d'abonné, (par exemple 2 Volts crête à crête), en agissant sur le niveau du signal $v_T$ appliqué sur la base du transistor 85.

Il est nécessaire d'empêcher toute apparition d'oscillations à 12 kHz sur la sortie 31 du joncteur reliée au central. On ne peut pas se contenter pour cette fréquence relativement élevée, de compter entièrement sur l'effet différentiel du joncteur réalisé comme on l'a expliqué à l'aide de la résistance d'équilibrage 23, car cet équilibrage n'est valable que pour les fréquences relativement basses des courants de conversation. On doit noter tout d'abord que le transistor 82 joue le rôle d'un circuit séparateur qui empêche toute transmission directe vers la résistance 23 et la borne de sortie 31, de la modulation à 12 kHz issue du transistor 85. Par ailleurs pour empêcher que la composante à 12 kHz de la tension 2u aux bornes de la ligne d'abonné, ne produise une composante à cette fréquence dans le courant de somme pondérée J traversant la résistance 23, on a connecté entre les bornes d'alimentation 47 et 48 de l'amplificateur symétrique un circuit résonnant série formé par le condensateur 90 et la self 91, et accordé sur la fréquence 12 kHz. De cette manière, les courants $i^+$ et $i^-$ appliqués sur les bornes 14 et 17 des circuits 16 et 19 pour former le courant de somme pondérée J sont débarrassés de toute composante à 12 kHz.

Dans le joncteur d'abonné de l'invention, il est avantageux par ailleurs de mettre en série sur les deux bornes d'alimentation 47 et 48 de l'amplificateur de puissance symétrique des dipôles 100 et 101 que l'on a représentés, par exemple sur la figure 3, par des rectangles en trait pointillé. Ces circuits sont traversés respectivement par les courants de collecteur des transistors passants de l'amplificateur, ces courants de collecteur étant pratiquement égaux au courant transversal i circulant dans la ligne d'abonné. Ces dipôles 100 et 101 ont pour but de créer des chutes de tension identiques pour limiter la puissance dissipée dans les transistors de l'amplificateur symétrique et faciliter ainsi leur intégration, tout en assurant toujours un fonctionnement correct de ces transistors dans toute la gamme des courants normaux dans la ligne d'abonné. Ils ont aussi pour but d'assurer une protection efficace de ces transistors en cas de court-circuit sur la ligne d'abonné.

On va d'abord expliquer quelle est la caractéristique idéale à obtenir pour la chute de tension y à travers un dipôle 100 ou 101 en fonction du courant i le traversant, dans la gamme normale de ce courant. On suppose par exemple qu'il s'agit du dipôle 100 et que le courant i qui le traverse est le courant de collecteur du transistor $T_1$. On a montré ci-dessus que grâce aux deux tensions de contreréaction − u et + u appliquées respectivement sur les deux bornes d'entrée 4 et 5 de l'amplificateur symétrique, le joncteur est équivalent à un pont d'alimentation de résistance totale Ro donnée par la formule (3) et également répartie en deux résistances Ro/2 sur les deux bornes de la source d'alimentation. La tension − u sur la borne 4 peut donc s'écrire − u = − (Ro/2)i. En négligeant la chute de tension base-émetteur du transistor $T_1$, cette tension − u se retrouve sur l'émetteur de ce transistor $T_1$. y étant la chute de tension à travers le dipôle 100, la tension de collecteur du transistor $T_1$ est − y. La différence de potentiel entre le collecteur et l'émetteur du transistor $T_1$ est donc − y − (− u) = − y + u = − y + (Ro/2)i.

Pour que le transistor $T_1$ ne soit jamais saturé, il suffit que la différence de potentiel entre son collecteur et son émetteur soit égale à une valeur $v_0$ supérieure à sa tension de saturation, ce qui s'écrit :

$$- y + \frac{Ro}{2} i = v_0$$

ou

$$y = \frac{Ro}{2} i - v_0 \tag{11}$$

Cette formule (11) indique donc, pour la gamme des courants normaux i dans la ligne d'abonné, la chute de tension y à réaliser dans le dipôle 100 en fonction du courant i qui le traverse, pour obtenir une différence de potentiel constante $v_0$ entre collecteur et émetteur du transistor $T_1$. Si $v_0$ est faible (2 V par exemple), il est clair que la puissance dissipée dans le transistor $T_1$ restera limitée pour toute la gamme des courants normaux i (par exemple de 20 mA à 80 mA).

Sur le diagramme de la figure 4 la courbe représentée en trait plein est la caractéristique idéale de la chute de tension y à travers un dipôle 100 ou 101 en fonction du courant i le traversant. Le segment AB sur cette courbe répond à l'équation de la formule (11). Ce segment est parallèle à la droite en pointillé d'équation u = (Ro/2) i et est décalé en ordonnées par rapport à cette droite de la quantité − $v_0$. Les courants normaux dans la ligne d'abonné sont compris entre le courant $i_m = 2 v_0/R$ correspondant au point A et le courant $i_M$ correspondant au point B. Pour des courants i allant de 0 à $i_m$, la caractéristique y = f(i) est représentée par le segment OA pour lequel y = 0. Pour des courants i croissant au-delà de la valeur maximum $i_M$ (ce qui peut se produire en cas de court-circuit sur la ligne d'abonné), la caractéristique y = f(i) est représentée approximativement par la partie BCDE de la courbe. Dans la première partie BC, la chute de tension y augmente rapidement. Dans la deuxième partie CD il se produit dans le dipôle un basculement qui permet d'obtenir la caractéristique représentée par la troisième partie DE, pour laquelle la résistance du dipôle devient très élevée et le courant i est limité à des valeurs faibles.

Une caractéristique $y = f(i)$ s'approchant de la forme idéale représentée à la figure 4, peut être obtenue à l'aide d'un dipôle 100 ou 101 dont le schéma est représenté à la figure 5.

Ce dipôle ayant les bornes 102 et 103 est pratiquement traversé par le courant de ligne i. Il comprend essentiellement une résistance 104 de faible valeur R, dans laquelle circule une fraction notable du courant i, en dérivation de laquelle se trouve connecté un circuit comprenant une résistance 105 de valeur relativement élevée aR en série avec l'espace émetteur-base du transistor pnp 106. Le courant circulant dans la résistance 104 peut s'écouler de la borne 114 vers la borne 103 par plusieurs chemins, le premier étant constitué par l'élément 107 qui est une résistance non linéaire dont on définira par la suite les caractéristiques, le second étant constitué par le trajet émetteur-collecteur du transistor composite de type pnp, constitué par l'interconnexion des deux transistors 108, 109, l'un de type pnp, l'autre de type npn, le troisième étant constitué par le collecteur du transistor 106 et la résistance 110 de valeur bR. Le chemins présentés par le pont des résistances 111, 112 et le transistor 113 présentent, comme on le verra par la suite, des impédances très élevées par rapport à celles des trois premiers chemins.

On examine d'abord le fonctionnement de ce dipôle dans la gamme des courants de ligne i tels que $0 < i < i_m$. Le courant i circule entièrement dans la résistance 104. La chute de tension Ri créée à ses bornes n'est pas suffisante pour rendre conducteur le transistor 106. Le faible courant base du transistor 108 s'écoule par la résistance 110 vers la borne 103 et suffit à rendre passant le transistor composite 108, 109. La chute de tension entre les bornes 114 et 103 est très faible, et pratiquement égale, si on néglige la chute de tension créée aux bornes de la résistance 110 par le très faible courant de base du transistor 108, à la tension de la diode émetteur-base de ce transistor. Par suite le courant circulant dans la résistance non linéaire 107 est faible et pratiquement tout le courant i passe par l'espace émetteur-collecteur du transistor composite 108, 109. L'impédance du dipôle entre ses bornes 102, 103 se réduit donc pratiquement à la valeur très faible de la résistance 104 de sorte que pour les courants i tels que $0 < i < i_m$, la caractéristique $y = f(i)$ du dipôle est très proche du segment OA sur la courbe de la figure 4.

On examine maintenant le fonctionnement du dipôle dans la gamme de courant i croissant de i à $i_M$. Pour $i = i_m$ la chute de tension $Ri_m$ aux bornes de la résistance 104 est juste suffisante pour rendre conducteur le transistor 106. Pratiquement la valeur de $i_m$ sera choisie telle que $Ri_m = 0{,}7$ V si le transistor 106 est un transistor au silicium. Une fraction $1/a$ du courant $(i - i_m)$ circule dans le transistor 106, créant aux bornes de la résistance 110 de valeur bR une chute de tension de valeur $(b/a) \cdot R(i - i_m)$. La chute de tension y aux bornes 102, 103 du dipôle est donc :

$$y = Ri + \frac{b}{a} (i - i_m) \, .$$

La caractéristique $y = f(i)$ correspondante est, pour i croissant de $i_m$ à $i_M$, une portion de droite de pente $((b/a) + 1)R$, que l'on peut rendre très proche du segment AB sur la courbe de la figure 4 en choisissant convenablement les valeurs aR et bR des résistances 105 et 106. Comme cela a déjà été expliqué, on a intérêt à choisir cette pente voisine de Ro/2.

Lorsque le courant i augmente, la tension entre les bornes 114 et 103 augmente, une fraction de plus en plus notable de ce courant i traverse la résistance 107 et par contre la fraction du courant i passant dans l'espace émetteur-collecteur du transistor composite 108, 109 décroît. En effet, en négligeant l'incidence du courant traversant le transistor 106, le courant traversant la résistance 107 de valeur Q s'écrit :

$$i_Q = \frac{b}{a} \frac{R}{Q} (i - i_m) \, ,$$

et le courant traversant le transistor composite est $(i - i_Q)$.

On examine enfin le fonctionnement du dipôle pour des courants i croissants, supérieurs à $i_M$. Au point B de la courbe de la figure 4, pour lequel $i = i_M$, le courant $i - i_Q$ s'annule. Ceci veut dire que le transistor composite 108, 109 se bloque, ce qui n'est possible que si le transistor 106 se sature. Tout le courant i passe à ce moment pratiquement dans la résistance 107 de valeur Q et la caractéristique $y = f(i)$ est représentée sur la courbe de la figure 4 par le segment BC de pente de valeur Q.

Comme on l'a déjà indiqué, l'élément 107 est choisi judicieusement de façon à se comporter comme une résistance non linéaire. Cet élément 107 peut être par exemple une thermistance à chauffage direct telle que son basculement se produise lorsqu'on lui applique un courant supérieur à une valeur de coude $i_c$. Lorsque le courant i traversant la thermistance 107 atteint la valeur $i_c$ correspondant au point C sur la courbe de la figure 4, la thermistance bascule et sa résistance passe de la valeur Q précitée à une valeur Q' très élevée. En même temps, le courant i passe brusquement de la valeur $i_c$ à la valeur $i_D = (Q/Q')i_c$, ce qui définit le point D sur la courbe de la figure 4. Ensuite, quand la tension aux bornes 102, 103 du dipôle augmente, ce dipôle se comporte comme une simple résistance de valeur très élevée $(Q' + R)$, ce qui correspond au semgent DE sur la courbe de la figure 4.

Le rôle du circuit constitué par le pont des résistances 111, 112 et par le transistor 113, est de maintenir bloqué le transistor composite 108, 109 quand la valeur du courant i décroît brusquement de $i_c$ à $i_D$ à la suite du basculement de la thermistance 107. On s'arrange simplement pour que, pour un courant i égal à $i_c$ et correspondant pratiquement à la tension $y_c$ aux bornes du pont de résistances 111, 112, la tension aux bornes de la résistance 111 suffise à saturer le transistor 113, ce qui bloque la jonction émetteur-base du transistor 108.

Le fonctionnement du joncteur de l'invention a été décrit jusqu'à présent dans le cas où les impédances de sortie de l'amplificateur de puissance symétrique ont une valeur pratiquement nulle. Bien que cela soit moins avantageux, on peut aussi utiliser dans ce joncteur un amplificateur de puissance symétrique ayant des impédances de sortie égales, mais non nulles. On appelle par la suite X la valeur commune de ces impédances de sortie.

On peut pour expliquer le fonctionnement du joncteur dans le cas où $X \neq 0$ effectuer les mêmes calculs que ceux donnés plus haut dans le cas où $X = 0$. En particulier, pour la transmission de la tension variable $e_c$ provenant du central vers la ligne d'abonné, on obtient aisément les résultats suivants, dans lesquels les termes utilisés ont des significations déjà précisées.

La tension $u_S$ recueillie aux bornes 6 et 7 de la ligne d'abonné peut s'écrire :

$$u_S = - \frac{2W}{W + 2\lambda R + 2X} e_c$$

Le joncteur se comporte pour les signaux variables comme une impédance :

$$Z = 2\lambda R + 2X$$

L'adaptation d'impédance entre la ligne d'abonné et le joncteur se traduit par $W = 2\lambda R + 2X$, auquel cas on obtient $u_S = - e_c$.

Pour le même sens de transmission la tension $v_S$ obtenue sur la sortie quatre fils du joncteur peut s'écrire :

$$v_S = \frac{2e_c}{W + 2\lambda R + 2X} \left( \frac{W}{2} + \lambda W_0 \right).$$

L'effet différentiel est parfaitement réalisé si l'impédance d'équilibrage $W_0$ est telle que :

$$W_0 = \frac{W}{2\lambda} + \frac{X}{\lambda} \ .$$

Pour la transmission vers le central de la tension variable $v_a$ engendrée dans le poste d'abonné on obtient les résultats suivants :

La tension $v_S$ recueillie sur la sortie quatre fils du joncteur s'écrit :

$$v_S = - \frac{\lambda(R + W_0)}{W + 2\lambda R + 2X} v_a \ .$$

Si l'impédance d'équilibrage $W_0$ est choisie pour réaliser l'effet différentiel on a : $v_S = - v_a/2$.

Finalement, entre l'accès deux fils du joncteur relié à la ligne d'abonné et l'accès quatre fils relié au central, on obtient quelle que soit la valeur de l'impédance X, une transmission sans pertes ($u_S = - e_c$, $v_S = - v_a/2$), en même temps qu'un effet différentiel parfait, en choisissant les valeurs de $\lambda$ et de R de façon que :

$$W = 2\lambda R + 2X$$

$$W_0 = \frac{W}{2\lambda} + \frac{X}{\lambda}$$

Il est toutefois préférable d'utiliser dans le joncteur de l'invention un amplificateur de puissance symétrique ayant des impédances de sortie X les plus faibles possible, car le courant transversal circulant dans la ligne d'abonné y fait dissiper une puissance en pure perte. De plus, en présence de courants longitudinaux induits, les potentiels des bornes de sortie du joncteur subissent un décalage égal à $Xi_e$, $i_e$ étant la valeur commune des courants longitudinaux dans chaque fil de la ligne d'abonné. Il faut donc dans le cas où $X \neq 0$ dimensionner l'amplificateur symétrique de façon qu'il fonctionne sans se saturer malgré ces décalages de potentiel parasites.

Enfin, le joncteur de l'invention peut être réalisé sous d'autres formes équivalentes à celle décrite jusqu'à présent. Il est en effet bien connu des spécialistes de la théorie des réseaux électriques que l'application des théorèmes de Thévenin et de Norton permet de trouver, à partir d'une structure donnée, des structures équivalentes déduites par dualité. La figure 6 représente une application de ces équivalences de structure, entre la structure décrite jusqu'à présent qui correspond au schéma 6a et une structure déduite par dualité qui correspond au schéma 6b

Sur le schéma 6a, la ligne d'abonné 1 est branchée entre les bornes de sortie 6 et 7 du joncteur. L'amplificateur de puissance symétrique est figuré, à la borne de sortie 6, par l'équivalence déduite du théorème de Thévenin, à savoir une source de tension $-$ u en série avec l'impédance de sortie X du joncteur, et à la borne de sortie 7, par les sources de tension $-$ E et $+$ u en série avec l'impédance de sortie X. La tension u est comme précédemment la tension appliquée à l'entrée 34 du circuit 35 et vaut :

$$u = \frac{\lambda}{2} z(i^+ + i^-)$$

z est l'impédance de charge traversée par le courant de somme pondérée et qui peut avoir une valeur différente pour le courant continu et pour les courants variables.

En appliquant le théorème de Norton, on obtient la structure du schéma 6b équivalente à celle du schéma 6a. Le schéma 6b montre deux sources de courant $S_1$ et $S_2$ formant un amplificateur injecteur de courant j fonctionnant de façon symétrique et débitant aux bornes de la ligne d'abonné 1 et en parallèle sur les deux impédances X conectées respectivement aux deux bornes 0 et $-$ E de la source d'alimentation ; aux bornes de ces deux impédances X sont mesurées respectivement les tensions $v^+$ et $v^-$. La valeur du courant j injecté par les sources de courant $S_1$ et $S_2$ se déduit de la tension u utilisée dans la structure équivalente du schéma 6a par la relation :

$$j = \frac{u}{X}.$$

En utilisant la valeur de u donnée ci-dessus et en faisant intervenir les tensions $v^+$ et $v^-$, on peut montrer que :

$$j = G(v^+ + v^-)$$

avec

$$G = \frac{\lambda z}{2X(\lambda z + X)}.$$

La structure 6b, fonctionnellement équivalente à la structure 6a, permet notamment comme cette dernière, de créer dans le joncteur une impédance équilibrée par rapport à la masse et de valeur 1/G que l'on peut régler en modifiant les valeurs de $\lambda$ et/ou z.

La structure 6b présente toutefois certains inconvénients rendant peu pratique sa réalisation. Ainsi pour inverser le sens du courant dans la ligne d'abonné on doit non seulement changer le sens du courant j fourni par les sources de courant $S_1$ et $S_2$, mais on doit également commuter les deux impédances X, l'une de la borne d'alimentation 0 à la borne d'alimentation $-$ E, l'autre de la borne $-$ E à la borne 0. Ceci conduit à des commutations compliquées. Par ailleurs avec la structure 6b il n'est pratiquement pas possible d'opérer avec une impédance de sortie X = 0, car cela conduirait à des valeurs de courant j qui devraient être infiniment grandes. En présence de courants longitudinaux induits de valeur $i_e$, on a donc nécessairement avec cette structure des décalages de potentiel $Xi_e$ aux bornes 6 et 7 du joncteur. L'amplificateur symétrique injecteur de coujant j doit donc pouvoir supporter sans se saturer des excursions de tension de sortie à ses bornes, inutilement élevées et dues à ces décalages de potentiel.

## Revendications

1. Joncteur d'abonné comportant un amplificateur de puissance symétrique ($T_1$-$T_4$) muni de deux bornes d'alimentation (47), (48) à relier aux deux bornes (2), (3) d'une source continue d'alimentation, et de deux bornes de sortie (6), (7) à relier aux deux extrémités de la ligne d'abonné (1), ce joncteur étant muni en outre de moyens pour former un courant de somme pondérée (J) des courants entrant ($i^+$) dans la ligne d'abonné et sortant ($i^-$) de la ligne d'abonné, de moyens (35) de déphasage et d'aiguillage pour former deux tensions en phase et en opposition de phase avec la tension aux bornes d'une impédance de charge (24), (25) traversée par ledit courant de somme pondérée (J) et pour appliquer ces deux tensions de façon contreréactive sur les deux bornes d'entrée (4), (5) de l'amplificateur ($T_1$-$T_4$), ce joncteur étant caractérisé en ce que, pour former le courant de somme pondérée (J), il comporte d'une part un miroir de courant (19) dont la borne somme (18) et la borne d'entrée (17) sont reliées respectivement à une borne (3) de la source continue d'alimentation et à la borne d'alimentation correspondante (48) de l'amplificateur de puissance symétrique, et d'autre part un circuit (16) de pondération et de sommation de deux courants d'entrée comprenant un circuit diviseur de tension (51), (52) dont une extrémité est connectée à la borne de sortie (21) du miroir de courant (19), dont l'autre extrémité est connectée à l'autre borne (2) de la source continue d'alimentation et dont enfin la borne intermédiaire (53) est connectée à l'autre borne d'alimentation (47) dudit amplificateur, le rapport de tension du circuit diviseur de tension (51), (52) étant ajusté pour être substantiellement égal au rapport de courant (k) du miroir de courant (19), la tension aux extrémités du circuit diviseur de tension (51), (52) étant appliquée à un circuit suiveur de tension (55), (56) qui est muni d'une résistance de réglage (56) et qui est réglé pour fournir ledit courant de somme pondéré (J) avec l'amplitude désirée.

2. Joncteur selon la revendication 1, caractérisé en ce que la résistance de réglage du circuit suiveur de tension (70-76) servant à régler l'amplitude du courant de somme pondérée (J) est divisée en deux résistances (77), (78) dont l'une (77) est découplée par un condensateur (79) dont la valeur d'impédance est très faible pour les courants de conversation, la valeur ($R_o$) de la résistance de pont d'alimentation du joncteur étant réglée au moyen de la résistance découplée (77) sans modifier l'impédance du joncteur pour les courants de conversation.

3. Joncteur selon la revendication 2, caractérisé en ce que, lorsque dans le central est détecté un faux appel de la part de l'abonné, la valeur de ladite résistance (77) découplée par un condensateur (79) est réduite automatiquement pour réduire le courant continu dans la ligne d'abonné.

4. Joncteur selon l'une des revendications 2 ou 3, caractérisé en ce que pour limiter le courant continu fourni par le joncteur à la ligne d'abonné, on utilise un circuit à seuil (80) qui reçoit à son entrée une fraction au moins de la tension aux bornes de ladite résistance (77) découplée par un condensateur (79) et qui fournit en cas de dépassement de seuil un courant qui est ajouté audit courant de somme pondérée (J.)

5. Joncteur selon la revendication 4, caractérisé en ce que ledit circuit à seuil (80) est un transistor recevant entre sa base et son émetteur ladite fraction de tension et fournissant par son collecteur ledit courant qui est ajouté au courant de somme pondérée (J).

6. Joncteur selon l'une des revendications 1 à 5 destiné à assurer un couplage en quatre fils entre la ligne d'abonné et un central téléphonique, caractérisé en ce que le courant de somme pondérée (J) traverse un montage formé de trois impédances (23), (24), (25) en série, l'entrée de ce montage étant reliée à la sortie (31) du joncteur côté central, la borne (33) commune entre la première impédance (23) et la deuxième impédance (24) étant reliée à l'entrée (34) desdits moyens de déphasage et d'aiguillage (35), la borne (28) commune entre la deuxième impédance (24) et la troisième impédance (25) étant reliée à l'entrée (27) du joncteur côté central.

7. Joncteur selon la revendication 6, caractérisé en ce que la première impédance (23) est ajustée pour réaliser l'effet différentiel.

8. Joncteur selon l'une des revendications 1 à 7, caractérisé en ce qu'il comporte un circuit séparateur (82), (83), (84) qui transmet la tension présente aux bornes de ladite impédance de charge (24), (25) vers l'entrée (34) desdits moyens de déphasage et d'aiguillage (35), des moyens pour moduler la tension appliquée à cette entrée (34) pendant la durée des trains d'oscillations du signal de taxation, par un signal ($v_T$) ayant la fréquence desdites oscillations, enfin des moyens de filtrage (90), (91) pour supprimer pratiquement toute composante à cette fréquence dans le courant de somme pondérée (J).

9. Joncteur selon la revendication 8, caractérisé en ce que lesdits moyens de filtrage sont constitués par un circuit résonnant série (90), (91) accordé sur la fréquence des oscillations du signal de taxation et connecté entre les deux bornes d'alimentation (47), (48) de l'amplificateur de puissance symétrique ($T_1$-$T_4$).

10. Joncteur selon l'une des revendications 1 à 9, caractérisé en ce que deux dipôles identiques (100), (101) sont connectés respectivement en série avec les deux bornes d'alimentation (47), (48) de l'amplificateur de puissance symétrique de façon à être traversés pratiquement par le courant (i) dans la ligne d'abonné, chaque dipôle étant un circuit actif agencé pour que le dipôle se comporte substantiellement comme une impédance de valeur faible pour un courant croissant de zéro à la valeur minimum $i_m$ du courant normal dans la ligne d'abonné, comme une impédance de valeur déterminée pour des variations de courant se produisant entre la valeur minimum $i_m$ et la valeur maximum $i_M$ du courant normal dans la ligne d'abonné, enfin ledit circuit actif comporte un élément de basculement (107) qui, lorsque le courant traversant le dipôle atteint par valeurs croissantes une valeur supérieure à ladite valeur $i_M$, amène l'impédance du dipôle à une valeur élevée.

11. Joncteur selon la revendication 10, caractérisé en ce que ladite impédance pour les variations de courant entre $i_m$ et $i_M$ a une valeur substantiellement égale à la moitié de la valeur de la résistance de pont d'alimentation du joncteur.

## Claims

1. A subscriber junctor comprising a symmetrical power amplifier ($T_1$-$T_4$) provided with two supply terminals (47, 48) for connection to the terminals (2), (3) of a direct current power supply and two output terminals (6), (7), for connection to the two ends of the subscriber's line (1), this junctor being *inter alia* provided with means for forming a weighted sum current (J) of the currents entering ($i^+$) and leaving ($i^-$) the subscriber's line, phase splitting means (35) for forming two voltages in phase and in phase opposition with the voltage at the terminals of a load impedance (24), (25) through which said weighted sum current (J) passes and for applying these two voltages as negative feedback voltages to the two input terminals (4), (5) of the amplifier ($T_1$-$T_4$), characterized in that the junctor, for forming the weighted sum current (J) comprises a current mirror (19) the summing terminal (18) and input terminal (17) of which are linked to a terminal (3) of the direct current power supply and to the corresponding supply terminal (48) of the symmetrical power amplifier, respectively, and on the other hand a weighting and summing circuit (16) for the two input currents, comprising a voltage dividing circuit (51, 52) one end of which is connected to the output terminal (21) of the current mirror (19), and whose other end is connected to the other terminal (2) of the direct current power supply and of which finally the intermediate terminal (53) is connected to the other supply terminal (47) of the said amplifier, the voltage ratio of the voltage divider circuit (51, 52) being adjusted so as to be substantially equal to the current ratio (k) of the current mirror (19), the voltage at the ends of the voltage divider circuit (51, 52) being applied to a voltage follower circuit (55, 56) which is provided with a control resistor (56) and is controlled in order to provide the said weighted sum current (J) with the desired amplitude.

2. A junctor as claimed in Claim 1, characterized in that the control resistor of the voltage follower circuit (70-76) used to control the amplitude of the weighted sum current (J) is divided into two resistors (77, 78) one of which (77) is decoupled by a capacitor (79) whose impedance value is very low for the speech currents, the value ($R_o$) of the resistor of the supply bridge of the junctor being controlled by means of the decoupled resistor (77) without modifying the impedance of the junctor for the speech currents.

3. A junctor as claimed in Claim 2, characterized in that when a wrong call on the part of the subscriber is detected in the exchange, the value of the said resistor (77) decoupled by a capacitor (79) is automatically reduced in order to reduce the direct current in the subscriber's line.

4. A junctor as claimed in one of the Claims 2 or 3, characterized in that in order to limit the direct current applied by the junctor to the subscriber's line, a threshold circuit (80) is used which receives at its input at least a fraction of the voltage at the terminals of the said resistance (77) decoupled by a capacitor (79) and which, in the case of the threshold being exceeded, supplies a current which is added to the weighted sum current (J).

5. A junctor as claimed in Claim 4, characterized in that the said threshold circuit (80) is a transistor receiving between its base and its emitter the said voltage fraction and supplying through its collector the said current which is added to the weighted sum current (J).

6. A junctor as claimed in any of the Claims 1 to 5 intended to ensure a four-wire coupling between the subscriber's line and a telephone exchange, characterized in that the weighted sum current (J) flows through a circuit formed by three series-arranged impedances (23), (24), (25), the input of this circuit being connected to the output (31) of the central side junctor, the common terminal (33) between the first impedance (23) and the second impedance (24) being linked to the input (34) of the said phase splitting means (35), the common terminal (28) between the second impedance (24) and the third impedance (25) being connected to the input (27) of the central side junctor.

7. A junctor as claimed in Claim 6, characterized in that the first impedance (23) is adjusted to produce the differential effect.

8. A junctor as claimed in any of the Claims 1 to 7, characterized in that it comprises a separator circuit (82, 83), (84) which transmits the voltage present at the terminals of the said load impedance (24, 25) towards the input (34) of the said phase splitting means (35), means for modulating the voltage applied to this input (34) during the oscillation trains of the metering signal, by means of a signal ($V_T$) having the frequency of the said oscillations, and finally filtering means (90), (91) for suppressing practically every component at this frequency in the weighted sum current (J.)

9. A junctor as claimed in Claim 8, characterized in that the said filtering means are formed by a series resonant circuit (90), (91) tuned to the frequency of the oscillations of the metering signal and connected between the two supply terminals (47), (48) of the symmetrical power amplifier ($T_1$, $T_4$).

10. A junctor as claimed in any of the Claims 1 to 9, characterized in that two identical dipoles (100), (101) are connected respectively in series with the two supply terminals (47), (48) of the symmetrical power amplifier so as to be crossed in practice by the current (i) in the subscriber's line, each dipole being an active circuit arranged so that the dipole behaves substantially as an impedance of a low value for a current increasing from zero to the minimum value $i_n$ of the normal current in the subscriber's line, as an impedance of a specific value for the current variations occurring between minimum value $i_n$ and the maximum value $i_N$ of the normal current in the subscriber's line, and finally the said active circuit comprising a balancing element (107) which, when the current crossing the dipole reaches *via* increasing values a value exceeding the said value $i_N$, brings the impedance of the dipole to a high value.

11. A junctor as claimed in Claim 10, characterized in that the said impedance for the current variations between $i_m$ and $i_M$ has a value substantially equal to half the value of the resistance of the supply bridge of the junctor.

**Ansprüche**

1. Teilnehmerverbindungssatz mit einem symmetrischen Leistungsverstärker ($T_1$-$T_4$) mit zwei

Speiseklemmen (47), (48) zur Verbindung mit den zwei Klemmen (2), (3) einer Gleichspannungsquelle und mit zwei Ausgangsklemmen (6), (7) zur Verbindung mit den zwei Enden der Teilnehmerleitung (1), wobei dieser Verbindungssatz ebenfalls mit Mitteln versehen ist zum Bilden eines gewichteten Summenstromes (J) der Ströme, die die Teilnehmerleitung eintreten ($i^+$) und die Teilnehmerleitung verlassen ($i^-$), mit Entphasungs- und Schaltmitteln (35) zum Bilden von zwei gleichphasigen und gegenphasigen Spannungen im Bezug auf die Spannung an den Klemmen einer Ladeimpedanz (24), (25), die durch den genannten gewichteten summenstrom (J) gekreuzt wird und zum Zuführen dieser zwei Spannungen als negative Rückkopplungspannungen zu den zwei Eingangsklemmen (4), (5) des Verstärkers ($T_1$-$T_4$), wobei dieser Verbindungssatz dadurch gekennzeichnet ist, dass er zum Bilden des gewichteten Summenstromes (J), einerseits einen Stromspiegel (19) enthält, dessen Summenklemmen (18) und Eingangsklemmen (17) mit einer Klemme (3) der Gleichspannungsquelle und mit der entspechenden Speiseklemme (48) des symmetrischen Leitungsverstärkers verbunden sind und andererseits eine Gewichtungs- und Summierschaltung (16) enthält für die zwei Eingangsströme mit einer Spannungsteilerschaltung (51), (52), wobei ein Ende mit der Ausgangsklemme (21) des Stromspiegels (19) verbunden ist und das andere Ende mit der anderen Klemme (2) der Gleichspannungsquelle verbunden ist und wobei die Zwischenklemme (53) mit der anderen Speiseklemme (47) des genannten Verstärkers verbunden ist, wobei das Verhältnis der Spannung der Spannungsteilerschaltung (51), (52) eingestellt wird um dem Verhältnis des Stomes (k) des Stromspiegels (19) im wesentlichen zu entsprechen, wobei die Spannung an den Enden der Spannungsteilerschaltung (51), (52) einer Spannungsfolgerschaltung (55), (56) zugeführt wird, die aus einem Regelwiderstand (56) besteht, und der geregelt wird um den genannten gewichteten Summenstrom (J) mit der gewünschten Amplitude zu liefern.

2. Verbindungssatz nach Anspruch 1, dadurch gekennzeichnet, dass der Regelwiderstand der Spannungsfolgerschaltung (70-76), die benutzt wird zur Regelung der Amplitude des gewichteten Summenstromes (J) in zwei Widerstände (77), (78) aufgeteilt ist, wobei der eine (77) durch einen Kondensator (79) entkoppelt ist, dessen Impedanzwert für die Sprechtströme sehr niedrig ist, wobei der Wert ($R_o$) des Speisebrückenwirderstandes des Verbindungssatzes mittels des entkoppelten Widerstandes (77) geregelt wird ohne Änderung der Impedanz des Verbindungssatzes für die Sprechströme.

3. Verbindungssazt nach Anspruch 2, dadurch gekennzeichnet, dass wenn im Vermittlungsamt ein falscher Anruf seitens des Teilnehmers ermittelt wird, der Wert des genannten Widerstandes (77), der durch einen Kondensator (79) entkoppelt ist, automatisch verringert wird um den Gleichstrom in der Teilnehmer leitung zu verringern.

4. Verbindungssazt nach einem der Ansprüche 2 oder 3, dadurch gekennzeichnet, dass zur Begrenzung des Gleichstromes, der durch den Verbindungssatz der Teilnehmerleitung geliefert wird, eine Schwellenschaltung (80) benutzt wird, die an dem Eingang wenigstens einen Teil der Spannung an den Klemmen des genannten Widerstandes (77), der durch einen Kondensator (79) entkoppelt ist, erhält und der in dem Falle, wo die Schwelle überschritten wird, einen Strom liefert, der zu dem gewichteten Summenstrom (J) addiert wird.

5. Verbindungssatz nach Anspruch 4, dadurch gekennzeichnet, dass die genannte Schwellenschaltung (80) ein Transistor ist, der zwischen der Basis und dem Emitter den genannten Spannungsteil zugeführt bekommt und der über den Kollektor den genannten Strom liefert, der zu dem gewichteten Summenstrom (J) addiert wird.

6. Verbindungssatz nach einem der Ansprüche 1 bis 5 zur Gewährleistung einer Vierdrahtkopplung zwischen der Teilnehmerleitung und dem Vermittlungsamt, dadurch gekennzeichnet, dass der gewichtete Summenstrom (J) durch eine Schaltungsanordnung geht, die durch drei reihengeschaltete Impedanzen (23), (24), (25) geht, wobei der Eingang dieser Schaltungsanordnung mit dem Ausgang (31) des zentralen Verbindungssatzes verbunden ist, wobei die gemeinsame Klemme (33) zwischen der ersten Impedanz (23) und der zweiten Impedanz (24) mit dem Eingang (34) der genannten Entphasungs- und Schaltmittel (35) verbunden ist, wobei die gemeinsame Klemme (28) zwischen der zweiten Impedanz (24) und der dritten Impedanz (25) mit dem Eingang (27) des zentralen Verbindungssatzes verbunden ist.

7. Verbindungssatz nach Anspruch 6, dadurch gekennzeichnet, dass die erste Impedanz (23) zum Erzeugen des differentiellen Effektes eingestellt wird.

8. Verbindungssatz nach einem der Ansprüche 1 bis 7, dadurch gekennzeichnet, dass dieser eine Trennschaltung (82), (83), (84) enthält, die die an den Klemmen der genannten Belastungsimpedanz (24) vorhandene Spannung zu dem Eingang (34) der gennannten Entphasungs- und Schaltmittel (35) überträgt, weiterhin Mittel zum Modelieren der diesem Eingang (34) zugeführten Spannung während der Dauer der Swingungsfolgen des Gebührensignals, mittels eines Signals ($V_T$) mit der Frequenz der genannten Swingungen und zum Schluss Filtermittel (90), (91) zum Unterdrücken praktisch jeden Anteils an dieser Frequenz in dem gewichteten Summenstrom (J.)

9. Verbindungssatz nach Anspruch 8, dadurch gekennzeichnet, dass die genannten Filtermittel aus einem Reihenresonanzkreis (90), (91) bestehen, der auf die Frequenz der Swingungen des Gebührensignals abgestimmt ist und zwischen den zwei Speiseklemmen (47), (48) des symmetrischen Leistungsverstärkers ($T_1$-$T_4$) liegt.

10. Verbindungssatz nach einem der Ansprüche 1 bis 9, dadurch gekennzeichnet, dass zwei identische Dipole (100), (101) mit den zwei Speiseklemmen (47), (48) des symmetrischen Leitungsverstärkers derart in Reihe liegen, dass sie praktisch durch den Strom (i) in der Teilnehmerleitung gekreuzt werden, wobei jeder Dipol eine aktive Schaltung ist damit der Dipol sich im wesentlichen als Impedanz mit einem geringen Wert für einen Strom, der von 0 bis zu einem Minimalwert $i_m$ des normalen Stromes in der Teilnehmerleitung geht, verhält, und als eine Impedanz mit einem spezifischen Wert für die Stromschwankungen, die zwischen dem minimalen Wert $i_m$ und dem maximalen $i_M$ des normalen Stromes in der Teilnehmerleitung entstehen und wobei zum Schluss die genannte aktive Schaltung eine bistabile Schaltung (107) enthält, die, wenn der Strom durch den Dipol durch zunehmende Werte einen höheren Wert als den genannten Wert $i_M$ erreicht, die Impedanz des Dipols auf einen hohen Wert bringt.

11. Verbindungssatz nach Anspruch 10, dadurch gekennzeichnet, dass die genannte Impedanz für die Swankungen des Stromes zwischen $i_m$ und $i_M$ einen Wert hat, der im wesentlichen dem halben Wert des Widerstandes des Speisebrückenwiderstandes des Verbindungssatzes entspricht.

FIG.1

FIG.2

6a

6b

FIG.6

FIG.3

FIG.4

FIG.5

4